Europäisches Patentamt

European Patent Office

Office européen des brevets

(11) Numéro de publication: **0 080 918**
**B1**

(12) # FASCICULE DE BREVET EUROPEEN

(45) Date de publication du fascicule du brevet:
23.04.86

(51) Int. Cl.⁴: **F 16 K 7/10, F 16 L 37/06**

(21) Numéro de dépôt: **82402090.3**

(22) Date de dépôt: **17.11.82**

(54) **Dispositif d'obturation pour canalisations.**

(30) Priorité: **20.11.81 FR 8121932**

(43) Date de publication de la demande:
**08.06.83 Bulletin 83/23**

(45) Mention de la délivrance du brevet:
**23.04.86 Bulletin 86/17**

(84) Etats contractants désignés:
**DE GB IT NL**

(56) Documents cités:
**CA - A - 1 041 069**
**DE - A - 2 623 142**
**FR - A - 1 166 480**
**FR - A - 2 292 922**
**FR - A - 2 334 045**
**FR - A - 2 440 510**
**GB - A - 954 051**
**GB - A - 2 039 653**
**US - A - 2 809 056**

**Brochure "Obturateur double", Société Petrometalic
FR-Cambrai**

(73) Titulaire: **Caoutchouc Manufacturé et Plastiques Société
Anonyme dite:, 49 rue Jean-Jaurès, F-95871 Bezons (FR)**

(72) Inventeur: **Ragout, Bernard, 39, rue Pasteur,
F-63170 Aubiere (FR)**

ACTORUM AG

# Description

L'invention est relative aux tuyaux souples et élastiques dont la paroi en caoutchouc est renforcée par au moins deux nappes ou deux paires de nappes d'armature constituées de cables souples disposés en hélice, ces nappes étant fixées, au moins à une extrémité du tuyau, sur des pièces rigides de fermeture ou de raccordement.

L'invention concerne plus particulièrement les dispositifs du genre dans lequel le tuyau souple est dilatable sous pression interne de sorte que le dispositif peut être utilisé pour constituer un bouchon gonflable servant à obturer des canalisations à réparer, des trous de forage ou pour d'autres applications similaires. Un tel dispositif d'obturation correspondant au préambule de la revendication 1 est connu par ex. du CA-A-1 041 069.

Pour certaines utilisations, par exemple pour obturer des canalisations de grand diamètre telles que des pipes-lines ou bien des trous de forage pétrolier, le dispositif doit pouvoir être gonflé à des pressions très élevées, pouvant atteindre plusieurs centaines de bars, afin d'assurer l'étanchéïté de l'obturation et afin de résister à l'effort axial d'expulsion auquel il est soumis par la pression différentielle entre les deux côtés amont et aval de la canalisation séparés par le bouchon. La sévérité de ces conditions d'emploi pose des problèmes ardus pour obtenir une fixation satisfaisante des extrémités du tuyau sur les pièces rigides.

Pour des dispositifs de diamètre relativement faible, c'est à dire jusqu'à 150 ou 200 mm, on a pu utiliser pour les pièces rigides d'extrémité des raccords borgnes du genre dans lequel l'extrémité du tuyau ou de ses nappes de renfort préalablement dénudées est serrée radialement entre un embout intérieur et une douille extérieure tubulaires et coaxiales, sensiblement cylindriques, comme décrit dans la brochure «Obturateur double» de la Société Petrometalic à Cambrai, France.

Pour des diamètres plus grands et/ou pour des pressions plus élevées on pourrait utiliser des systèmes de brides annulaires rigides du genre de celles utilisées pour raccorder les tuyaux souples de grands diamètres, telles que décrites dans le brevet US-A-2 809 056. Mais ces brides annulaires ont l'inconvénient d'avoir un diamètre extérieur nettement plus grand que le diamètre du tuyau, ce qui est particulièrement gênant dans le cas d'un obturateur dilatable devant être mis en place par des accès exigus ou susceptible d'avoir à franchir des parties coudées de canalisation. En outre ces brides réduisent fortement la dilatation utile du tuyau puisque la première partie de la dilatation radiale du tuyau ne sert à amener le diamètre de ce tuyau que jusqu'au diamètre des brides, ensuite de quoi seulement la dilatation ultérieure du tuyau peut permettre d'appliquer fortement le tuyau sur la surface interne de la canalisation à obturer.

En conséquence l'invention vise à fournir un dispositif à tuyau souple dans lequel les extrémités du tuyau sont accrochées d'une façon extrêmement solide aux pièces rigides d'extrémité afin que l'ensemble puisse résister à des efforts très importants, particulièrement à ceux résultant de pressions internes très élevées.

Plus spécialement l'invention vise à fournir un dispositif pour l'obturation des canalisations, des trous de forage et applications similaires, présentant un obturateur dilatable sous pression élevée comportant un tuyau souple dans lequel le mode d'accrochage des extrémités du tuyau sur les pièces rigides d'extrémité permette de donner à ces pièces un diamètre extérieur ne dépassant pas sensiblement le diamètre du tuyau. Cela permet d'utiliser pleinement toute la capacité de dilatation du tuyau.

Dans un tel dispositif, au moins une extrémité du tuyau, renforcé par au moins deux nappes d'armatures en cables souples disposés en hélice, est fixée par serrage sur deux éléments rigides annulaires, co-axiaux. Ce dispositif selon l'invention est caractérisé en ce que lesdits éléments rigides annulaires sont constitués par un élément intérieur d'appui et un élément extérieur de frettage qui présentent des surfaces de serrage coniques divergentes vers l'extrémité du tuyau souple pour serrer directement les nappes d'armatures et en ce qu'un troisième élément rigide annulaire présente une section en coin dont les surfaces coniques sont à enfoncer entre les extrémités des nappes d'armature afin de les serrer respectivement contre l'élément d'appui et l'élément de frettage.

Cet arrangement permet d'obtenir une excellente fixation de l'extrémité du tuyau du fait que, en service, les efforts de tension exercés sur les nappes de renfort du tuyau tendent à enfoncer le coin entre lesdites surfaces de serrage et à produire un auto-serrage de ces nappes à la fois contre les surfaces de l'élément intérieur d'appui et de l'élément extérieur de frettage.

De préférence l'angle au sommet de la section du coin présente une valeur faible, de l'ordre de 10 à 30° et cet angle est réparti de part et d'autre de la surface cylindrique passant par le sommet du coin. Cela permet notamment de donner aux pièces rigides d'extrémité une section suffisante tout en maintenant leur diamètre à une valeur faible, égale ou peu supérieure au diamètre du tuyau.

D'autres modes particuliers de réalisation de l'invention apparaissent dans les revendications dépendantes.

D'autres caractéristiques et avantages de l'invention ressortiront de la description détaillée d'un exemple de réalisation illustré sur le dessin ci-joint dans lequel:

– les fig. 1 et 2 sont des vues en élévation demi-coupe d'un dispositif d'obturation à l'état libre, non dilaté du tuyau et du dispositif dilaté dans une canalisation à obturer.

– les fig. 3 et 4 sont des vues partielles en coupe montrant à plus grande échelle, l'accrochage des nappes sur les pièces d'extrémité.

Le dispositif illustré comprend essentiellement un tuyau ou manchon tubulaire cylindrique en caoutchouc 10 fixé à chaque extrémité sur des fermetures rigides comprenant des fonds étanches 11 dont l'un au moins comporte une admission de fluide sous pression 12. La paroi en caoutchouc du tuyau 10 est renforcée intérieurement par deux nappes ou par deux paires de nappes d'armature concentriques 14, chaque nappe étant constituée de cables souples parallèles, de préférence métalliques, qui sont orientés obliquement en hélice suivant des angles faibles, de l'ordre de 10 à 30°, par rapport aux génératrices du tuyau. D'une nappe à l'autre les cablés sont orientés en sens inverse. L'angle initial de pose des cablés des nappes d'armature 14 détermine le taux de dilatation maximum du tuyau 10 entre son diamètre à l'état libre cylindrique et son diamètre maximum à l'état dilaté sous pression interne. Ce taux de dilatation peut être de l'ordre de 1,5 à 3 environ, mais en service cette dilatation est normalement limitée par la paroi de la canalisation 20 ou du trou à obturer de façon à obtenir une pression élevée d'application du tuyau sur cette paroi. Dans les exemples illustrés les deux nappes ou les deux paires de nappes de renfort 14 sont superposées étroitement l'une sur l'autre mais elles pourraient aussi être espacées les unes des autres par une couche de gomme intermédiaire.

Selon l'invention, les extrémités du tuyau 10 sont ainsi accrochées et fixées sur les fermetures rigides. Les extrémités 14.1 et 14.2 des nappes 14 (ou des paires de nappes) sont engagées entre deux éléments rigides annulaires coaxiaux 21–22 formant l'un un appui intérieur et l'autre une frette extérieure qui présentent des surfaces de serrage côniques divergentes vers les extrémités des nappes.

Un troisième élément rigide annulaire 23 en forme de coin est enfoncé axialement entre les extrémités des deux nappes de renfort de façon à serrer ces extrémités respectivement contre l'élément d'appui 21 et contre l'élément de frettage 22. Au moins l'élément d'appui 21 et éventuellement les deux éléments 21, 22 sont fixés, par exemple par des boulons 17, 18 au fond correspondant 11 et ils sont rendus solidaires l'un de l'autre dans le sens axial.

Le coin 23 prend simplement appui sur le fond 11 qui le maintient en position serrée contre les nappes. Eventuellement les surfaces de serrage de l'un ou plusierus des éléments rigides 21–22–23 pourraient présenter des crans, nervures ou aspérités propres à augmenter l'adhérence et l'accrochage des nappes à ces surfaces.

On voit qu'avec cet arrangement tout effort de traction exercé sur les nappes 14, par suite de la pression de gonflage en position dilatée du tuyau 10, tend à enfoncer le coin 23 entre l'appui 21 et la frette 22 et à produire ainsi un auto-serrage des extrémités 14.1, 14.2 des nappes entre les surfaces de serrage côniques correspondantes de ces éléments. Cet auto-serrage résulte de la faible valeur de l'angle au sommet A de la section de l'élément en forme de coin 23.

Cet angle A est compris en pratique entre 10 et 30° environ. Les surfaces de serrage cônique de l'appui 21 et de la frette 22, qui sont normalement parallèles aux surfaces côniques de coin forment donc entre elles un angle égal à l'angle A. Cependant le plan cylindrique P passant par le sommet du coin n'est pas nécessairement en coïncidence avec la bissectrice de l'angle A et la répartition de l'angle A par rapport à ce plan peut être telle que les angles de pente B et C des surfaces côniques de l'appui 21 et de la frette 22 soient inégaux et compris entre 5 et 20° environ. De préférence cependant l'angle de pente C de la surface cônique de la frette est compris entre 5 et 10° et il est inférieur à l'angle de pente V de la surface cônique de l'appui 21, ce qui permet notamment d'augmenter le diamètre intérieur D.1 de la frette 22 (et donc de rapprocher les nappes 14 de la surface extérieure du tuyau 10) tout en maintenant le diamètre extérieur D2 de la frette à une valeur sensiblement égale ou peu supérieure au diamètre extérieur D3 du tuyau et tout en conservant pour la frette une section suffisante pour sa résistance mécanique aux efforts résultant du serrage et de la tension des nappes en position dilatée du tuyau.

De plus, et aussi pour favoriser la déformation des nappes de renfort 14 et du caoutchouc au cours de la dilatation du tuyau 10 la frette 22 présente une longuer axiale au moins égale et de préférence un peu supérieure à la longueur axiale du coin et à la longueur axiale de l'appui 21 avec un bord intérieur arrondi de raccordement entre sa surface cônique et sa face d'extrémité.

Avec l'arrangement ci-dessus décrit les nappes de renfort 14 déterminent dans la paroi du tuyau en caoutchouc 10 un revêtement extérieur relativement mince 16 et une couche interne 15 qui peut avantageusement être plus épaisse de façon a améliorer l'étanchéïté et à s'opposer au fluage du caoutchouc entre les cablés des nappes 14 lorsque le dispositif est utilisé à des très fortes pressions. Cette couche 15 peut être prolongée sous l'élément d'appui 21 de façon à former un joint d'étanchéïté contre le fond 11.

Pour la fabrication du dispositif décrit, on confectionne le tuyau 10 avec des couches de mélange caoutchouteux et des nappes de renforts 14 de préférence enduites de caoutchouc et l'on met en place les éléments rigides 21, 22, 23 en position de serrage des nappes 14. Puis on vulcanise le tuyau de façon à obtenir en même temps l'adhérence du caoutchouc aux nappes de renfort et aux éléments rigides d'extrémité, ce qui assure une cohésion et une étanchéïté excellentes de l'ensemble.

Il résulte de ce qui précède que le dispositif décrit peut être utilisé en tant que bouchon d'obturation dans des canalisations ou des trous ayant des diamètres intérieurs compris entre environ le diamètre extérieur D3 du tuyau à l'état libre et le diamètre extérieur du tuyau à l'état dilaté sous pression interne. Toutes choses étant égales par ailleurs et en particulier dans le cas de dispositif de grands diamètres, la longueur de la surface de contact du tuyau sur la paroi de la canalisation ou du trou à obturer peut ainsi être augmentée.

Selon les exigences des applications rencontrées en pratiques on peut donc obtenir soit une plus grande résistance à l'effort axial d'expulsion (pour une longueur imposée du dispositif) soit un encombrement en longueur plus faible (pour un taux de dilatation imposé).

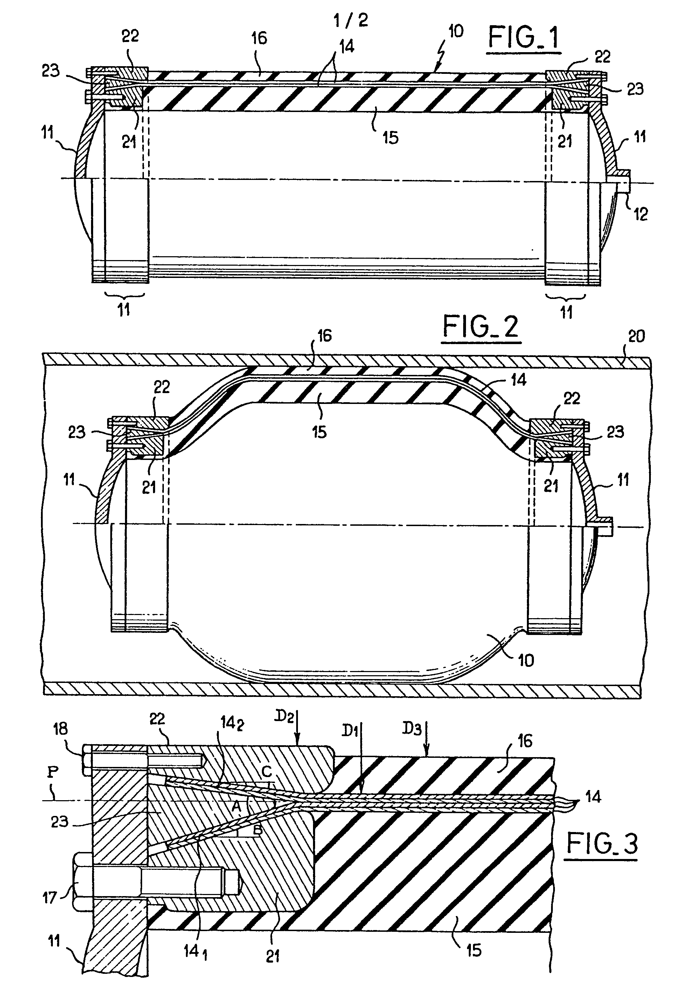

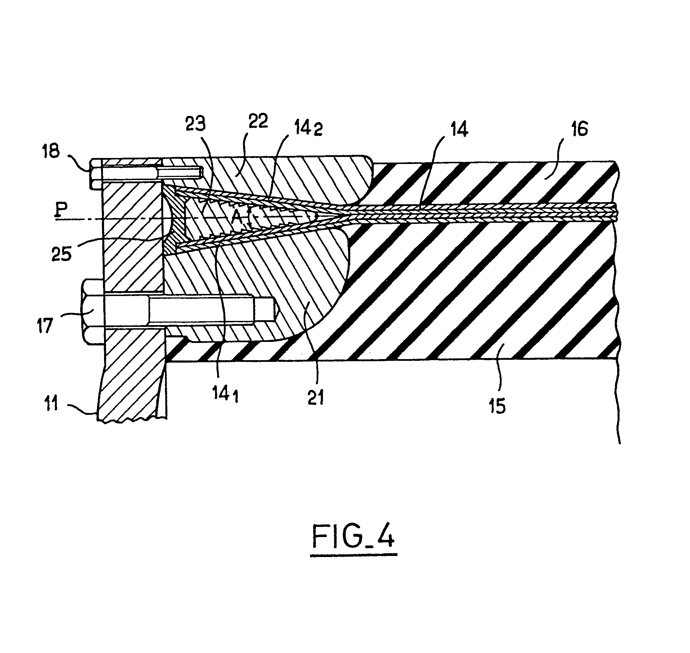

L'exemple de réalisation illustré sur la fig. 4 est semblable à celui de la fig. 3 sauf en ce qui concerne les particularités suivantes:

Les surfaces de serrage coniques divergentes de l'élément intérieur d'appui 21 et de l'élément extérieur de frettage 22, ainsi que les surfaces coniques correspondantes du coin 23 forme un angle A qui est réparti symétriquement par rapport au plan cylindrique P passant par le sommet de la section du coin. Les surfaces coniques du coin 23 présentent des crans pour augmenter l'adhérence et l'accrochage des nappes de renfort 14.1, 14.2.

Le coin 23 est plus court dans le sens axial de sorte que sa face d'extrémité est en retrait par rapport aux faces d'extrémité des éléments 21 et 22. Cela permet de faire dépasser les extrémités des nappes 14.1, 14.2 au delà de la face d'extrémité du coin et au besoin de rabattre les bouts de ces nappes contre cette face d'extrémité. Cette disposition permet aussi de prévoir la présence d'un joint d'étanchéïté en caoutchouc 25 en avant du coin et des extrémités des nappes 14.1, 14.2 pour les protéger des infiltrations d'humidité.

**Revendications**

1. Dispositif d'obturation pour canalisations (20), présentant un obturateur dilatable sous pression élevée comportant un tuyau (10) souple et élastique qui est renforcé par au moins deux nappes d'armature (14) en cables souples disposés en hélice et qui est fixé au moins à une extrémité sur deux éléments rigides (21, 22) annulaires co-axiaux, caractérisé en ce que lesdits éléments rigides annulaires sont constituées par un élément intérieur d'appui (21) et un élément extérieur de frettage (22) qui présentent des surfaces coniques divergentes vers l'extrémité du tuyau souple (10) pour serrer directement lesdites nappes d'armature (14), et en ce qu'un troisième élément rigide annulaire (23) présente une section en coin dont les surfaces coniques sont à enfoncer entre les extrémités (14.1, 14.2) des nappes d'armature (14) afin de les serrer respectivement contre l'élément d'appui (21) et l'élément de frettage (22).

2. Dispositif selon 1° caractérisé en ce que les surfaces de serrage coniques du troisième élément (23) ont un angle au sommet A de la section qui est compris entre 10 et 30° et qui est réparti de part et d'autre du plan cylindrique P passant par le sommet du coin.

3. Dispositif selon 2° caractérisé en ce que les surfaces de serrage coniques du coin (23) sont symétriques par rapport au plan cylindrique P passant par le sommet du coin.

4. Dispositif selon 1° ou 2° caractérisé en ce que l'angle de pente C des surfaces de serrage de l'élément de frettage (22) est compris entre 5 et 20° environ et cet angle de pente est plus faible que l'angle de pente B des surfaces de serrage de l'élément d'appui (21).

5. Dispositif selon l'une des revendications 1 à 4° caractérisé en ce que l'élément d'appui (21) et l'élément de frettage (22) sont solidaires l'un de l'autre dans le sens axial et le troisième élément en coin (23) est maintenu enfoncé entre ces deux éléments.

6. Dispositif selon l'une des revendications 1 à 5, caractérisé en ce que au moins l'élément d'appui (21) est fixé à un fond étanche (11) de fermeture du tuyau.

7. Dispositif selon l'une des revendications précédentes caractérisé en ce que l'élément extérieur de frettage (22) présente une longueur axiale égale ou un peu supérieur à celle du coin (22) et de l'élément d'appui (21).

8. Dispositif selon l'une des revendications précédentes, caractérisé en ce que l'élément en coin (23) présente une longueur axiale inférieure à la longueur axiale des surfaces de serrage des éléments intérieur d'appui (21) et extérieur de frettage (22) et en ce que les extrémités des nappes d'armature (14) du tuyau (10) dépassent la face frontale avant de l'élément en coin (23).

9. Dispositif selon l'une des revendications précédentes, caractérisé en ce que l'élément extérieur de frettage (22) présente un diamètre extérieur égal ou peu supérieur à celui du tuyau souple.

10. Dispositif selon l'une des revendications précédentes caractérisé en ce que les nappes d'armature (14) définissent dans la paroi du tuyau un revêtement extérieur mince (16) et un tube intérieur d'étanchéïté plus épais (15).

11. Dispositif selon l'une des revendications précédentes, caractérisé en ce que le tuyau en caoutchouc (10) est vulcanisé après mise en place et serrage des éléments rigides annulaires (21–23).

**Patentansprüche**

1. Absperrorgan für Leitungen (20), bestehend aus einem aufblasbaren Verschluss mit einem weichen und elastischen Schlauch (10), der mit mindestens zwei Verstärkungslagen (14) aus weichen Kabeln verstärkt ist, die schraubenlinienförmig angeordnet sind, wobei der Schlauch an mindestens einem Ende auf zwei ringförmigen, koaxialen, starren Bauteilen (21, 22) befestigt ist, dadurch gekennzeichnet, dass die ringförmigen starren Bauteile aus einem inneren Stützelement (21) und einem äusseren Schrumpfelement (22) bestehen, die zum Ende des weichen Schlauches (10) hin divergierende konische Klemmflächen aufweisen, um die Verstärkungslagen (14) unmittelbar einzuklemmen, und dass ein drittes ringförmiges starres Bauteil (23) einen keilförmigen Querschnitt hat, dessen Flächen zwischen die Enden (14.1, 14.2) der Verstärkungslagen (14) eingepresst sind, um sie gegen das Stützelement (21) bzw. das Schrumpfelement (22) anzupressen.

2. Absperrorgan nach Anspruch 1, dadurch gekennzeichnet, dass der Keilwinkel (A) der konischen Klemmflächen des dritten Bauteils (23) zwischen 10 und 30° beträgt und dass der Keilwinkel durch eine konische Fläche (P) halbiert wird, die durch die Spitze des Keils hindurchgeht.

3. Absperrorgan nach Anspruch 2, dadurch gekennzeichnet, dass die konischen Klemmflächen des Keils (23) in Bezug auf die durch die Spitze des Keils hindurchgehende zylindrische Fläche (P) symmetrisch sind.

4. Absperrorgan nach Anspruch 1 oder 2, dadurch gekennzeichnet, dass der Neigungswinkel (C) der Klemmflächen des Schrumpfelementes (22) zwischen 5 und 20° beträgt und dass dieser Neigungswinkel kleiner ist als der Neigungswinkel (B) der Klemmfläche des Stützelementes (21).

5. Absperrorgan nach einem der Ansprüche 1 bis 4, dadurch gekennzeichnet, dass das Stüztelement (21) und das Schrumpfelement (22) in Axialrichtung einteilig sind und dass das keilförmige dritte Bauteil (23) zwischen diese beiden Elemente eingepresst ist.

6. Absperrorgan nach einem der Ansprüche 1 bis 5, dadurch gekennzeichnet, dass zumindest das Stützelement (21) an einem dichten Verschlussdeckel (11) des Schlauches befestigt ist.

7. Absperrorgan nach einem der vorhergehenden Ansprüche, dadurch gekennzeichnet, dass das äussere Schrumpfelement (22) eine axiale Erstreckung hat, die gleich oder geringfügig grösser ist als diejenige des Keils (23) bzw. des Stützelementes (21).

8. Absperrorgan nach einem der vorhergehenden Ansprüche, dadurch gekennzeichnet, dass das keilförmige Bauteil (23) eine axiale Erstreckung aufweist, die kleiner ist als die axiale Erstreckung der Klemmflächen des inneren Stützelementes (21) und des äusseren Schrumpfelementes (22) und dass die Enden der Verstärkungslagen (14) des Schlauches (10) über die Vorderseite des keilförmigen Bauteils (23) hinausragen.

9. Absperrorgan nach einem der vorhergehenden Ansprüche, dadurch gekennzeichnet, dass das äussere Schrumpfelement (22) einen Aussendurchmesser hat, der gleich oder geringfügig grösser ist als der Aussendurchmesser des weichen Schlauches.

10. Absperrorgan nach einem der vorhergehenden Ansprüche, dadurch gekennzeichnet, dass die Verstärkungslagen (14) in der Wand des Schlauches an eine dünne äussere Verkleidung (16) und an ein dichtes Innenrohr (15) von grösserer Dicke angrenzen.

11. Absperrorgan nach einem der vorhergehenden Ansprüche, dadurch gekennzeichnet, dass der Schlauch aus Kautschuk (10) vulkanisiert wird, nachdem die ringförmigen starren Bauteile (21–23) angebracht und festgeklemmt sind.

Claims

1. An obturating device for pipes (20), consisting of an obturator which is expansible under high pressure comprising a flexible and elastic tube (10) which is reinforced by at least two reinforcing layers (14) of helically positioned flexible cords and which is secured at least at one extremity to two rigid, co-axial and annular elements (21, 22), characterised in that the said rigid annular elements comprise an internal supporting element (21) and an external clamping element (22) which have tapering surfaces diverging towards the extremity of the flexible tube (10) for direct clamping of the said reinforcing layers (14) and in that a third rigid annular element (23) has a wedge-shaped cross-section of which the tapering surfaces are inserted between the extremities (14.1, 14.2) of the reinforcing layers (14) to lock these against the support element (21) and the clamping element (22).

2. A device according to claim 1, characterised in that the tapering gripping surfaces of the third element (23) have an angle at the apex A of the section which is comprised between 10 and 30° and which is distributed to either side of the cylindrical plane P passing through the apex of the wedge.

3. A device according to claim 2, characterised in that the tapering gripping surfaces of the wedge (23) are symmetrical with respect to the cylindrical plane P passing through the apex of the wedge.

4. A device according to claim 1 or 2, characterised in that the angle of inclination C of the gripping surfaces of the clamping element (22) is comprised between 5 and 20°, approximately, and this angle of inclination is smaller then the angle of inclination B of the gripping surfaces of the supporting element (21).

5. A device according to one of the claims 1 to 4, characterised in that the supporting element (21) and the clamping element (22) are locked with each other in the axial direction and the third wedge-shaped element (23) is held inserted between these two elements.

6. A device according to one of the claims 1 to 5, characterised in that at least the supporting element (21) is fastened to a hermetic base (11) for closure of the tube.

7. A device according to one of the preceding claims, characterised in that the outer clamping element (22) has an axial length which is equal to or a little greater then that of the wedge (22) and of the supporting element (21).

8. A device according to one of the preceding claims, characterised in that the wedge-shaped element (23) has an axial length smaller than the axial length of the gripping surfaces of the internal and external supporting and clamping elements (21) and (22) and in that the extremities of the reinforcing layers (14) of the tube (10) extend beyond the front end face of the wedge-shaped element (23).

9. A device according to one of the preceding claims, characterised in that the outer clamping element (22) has an external diameter equal to or a little greater then that of the diameter of the flexible tube.

10. A device according to one of the preceding claims, characterised in that the reinforcing layers (14) delimit within the wall of the tube a thin outer sheath (16) and a thicker internal sealing tube (15).

11. A device according to one of the preceding claims, characterised in that the rubber tube (10) is vulcanised after the rigid annular elements (21–23) have been placed in position and clamped.

FIG_1

FIG_2

FIG_3

## FIG_4